# DEMANDE DE BREVET EUROPEEN

(11) **EP 1 431 089 A1**
(43) Date de publication de la demande: **23.06.2004**
(21) Numéro de dépôt: 03292922.6
(22) Date de dépôt: 25.11.2003
(51) Int. Cl.: B60H 3/00

(54) **Dispositif de diffusion d'au moins un parfum dans un habitacle d'un véhicule automobile**

(30) Priorité: 20.12.2002 FR 0216406
(71) Demandeur: Peugeot Citroen Automobiles SA, 78140 Vélizy Villacoublay (FR)
(72) Inventeur: Nicot, Claude, 25200 Grand Charmont (FR)
(74) Mandataire: Lanceplaine, Jean-Claude

(57) **Abrégé**

L'invention concerne un dispositif de diffusion d'au moins un parfum dans un habitacle d'un véhicule automobile, caractérisé en ce qu'il comprend un boîtier (11) adaptable sur un élément (1) de répartition d'air dans l'habitacle et comprenant au moins un emplacement de positionnement d'une cartouche contenant un parfum, des moyens de communication de l'intérieur du boîtier (11) avec l'élément de répartition d'air (1) et un organe de commande (20) déplaçable au moins entre une première position de diffusion du parfum par effet d'aspiration de l'air dans l'élément de répartition (1) à travers lesdits moyens de communication et une deuxième position de fermeture pour empêcher la diffusion du parfum.

## Description

La présente invention concerne un dispositif de diffusion d'au moins un parfum dans un habitacle d'un véhicule automobile.

Jusqu'à présent, les véhicules automobiles ne comportent aucun dispositif de diffusion de parfum d'ambiance intégré dans l'habitacle.

En effet, on connaît des dispositifs de diffusion de parfum qui sont constitués par des blocs ou d'autres éléments que l'utilisateur fixe sur un équipement interne de l'habitacle. Ces blocs sont le plus souvent inesthétiques et nuisent à l'harmonie générale de cet habitacle.

L'invention a pour objet un dispositif de diffusion d'au moins un parfum dans un habitacle d'un véhicule automobile, caractérisé en ce qu'il comprend un boîtier adaptable sur un élément de répartition d'air dans l'habitacle et comprenant au moins un emplacement de positionnement d'une cartouche de parfum munie de trous pour le dégagement de ce parfum, des moyens de communication de l'intérieur du boîtier avec l'élément de répartition d'air et un organe de commande déplaçable au moins entre une première position d'ouverture d'un orifice supplémentaire ménagé dans ladite cartouche pour créer une mise à l'air libre de la cartouche et diffuser le parfum par effet d'aspiration de l'air dans l'élément de répartition à travers les moyens de communication et les trous de la cartouche et une deuxième position de fermeture de cet orifice pour empêcher la diffusion du parfum.

Selon d'autres caractéristiques de l'invention :
- l'élément de répartition d'air est formé par un corps d'aérateur installé derrière une ouverture d'aération ménagée dans un équipement intérieur du véhicule, équipé de moyens de fixation par encliquetage du boîtier derrière une face externe dudit équipement, les moyens de communication débouchant dans ledit corps d'aérateur,
- l'organe de commande comprend une couronne déplaçable en rotation dans le boîtier autour d'un axe et comportant une patte de déplacement en translation sur un fond du boîtier d'une réglette munie d'un trou destiné à être placé en regard de l'orifice de la cartouche correspondante dans la première position dudit organe de commande,
- les moyens de communication sont formés, d'une part, par un conduit axial ménagé dans l'axe de rotation de la couronne et débouchant d'un côté à l'intérieur de cette couronne et de l'autre côté dans le corps d'aérateur et, d'autre part, par un orifice ménagé dans la couronne en regard de l'emplacement de la cartouche,
- le boîtier comporte deux emplacements de positionnement de deux cartouches contenant chacune un parfum différent, disposés de part et d'autre de la couronne,
- la réglette comporte un second trou et est déplaçable en translation par la couronne dans une troisième position dans laquelle ledit second trou est destiné à être placé en regard de l'orifice de la seconde cartouche pour la mise à l'air libre de cette seconde cartouche, l'orifice de la première cartouche étant obturé par la réglette dans ladite première position et les orifices desdites cartouches étant obturés par cette réglette dans ladite deuxième position,
- la couronne comporte un second orifice en regard de l'emplacement de la seconde cartouche,
- le boîtier comporte un organe élastique de maintien de la couronne et de la réglette dans la deuxième position,
- la couronne comporte sur une partie de sa surface externe une zone surmoulée par exemple en caoutchouc affleurant la face externe de l'équipement intérieur du véhicule, pour déplacer ladite couronne en rotation,
- chaque cartouche comporte une extrémité opposée à l'orifice de mise à l'air libre, affleurant la face externe de l'équipement intérieur du véhicule,
- chaque cartouche est extractible à partir de l'intérieur du véhicule par une clé de préhension.

L'invention sera mieux comprise à la lecture de la description qui va suivre, donnée à titre d'exemple et faite en se référant aux dessins annexés, sur lesquels :
- la Fig. 1 est une vue schématique en perspective d'une façade d'un élément de répartition d'air dans un habitacle, équipé d'un dispositif de diffusion d'au moins un parfum conforme à l'invention,
- la Fig. 2 est une vue schématique en perspective du dispositif de diffusion du parfum monté derrière une façade d'un élément de répartition d'air,
- la Fig. 3 est une vue schématique en perspective d'une cartouche de parfum du dispositif de diffusion,
- la Fig. 4 est une vue schématique en perspective de l'intérieur du corps de l'élément de répartition d'air équipé du dispositif de diffusion,
- la Fig. 5 est une vue schématique en perspective éclatée des différentes pièces du dispositif de diffusion,
- la Fig. 6 est une vue schématique en perspective du dispositif de diffusion.

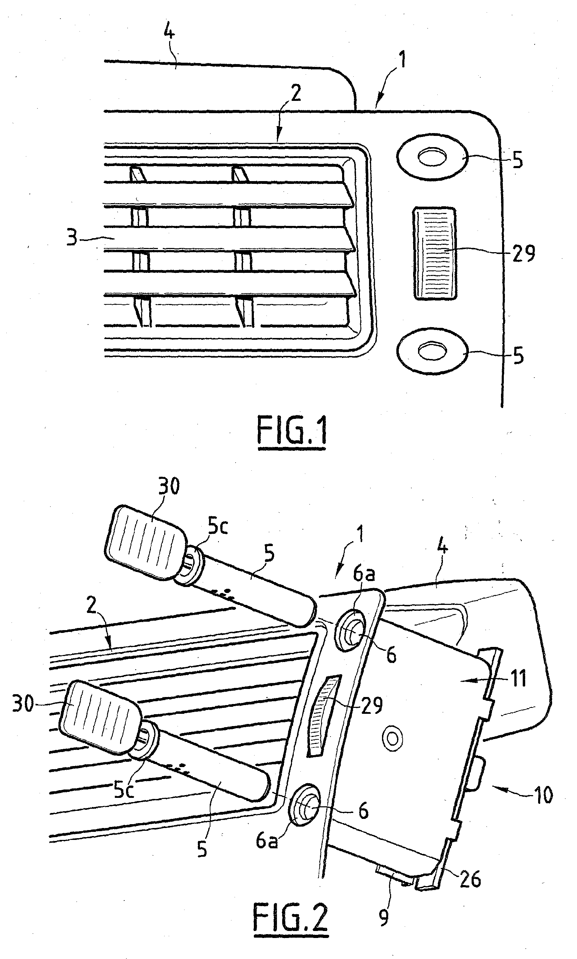

Sur les Figs. 1 et 2, on a représenté schématiquement un élément de répartition d'air dans un habitacle d'un véhicule automobile désigné dans son ensemble par la référence 1 et qui est constitué par exemple par la façade d'un aérateur disposé dans un équipement intérieur, comme par exemple une planche de bord du véhicule automobile.

De manière classique, l'élément de répartition d'air 1 comprend une ouverture 2 à l'intérieur de laquelle est montée une grille 3 déplaçable entre une position de fermeture et une position d'ouverture pour mettre en communication l'habitacle avec un système de ventilation, comme par exemple un système de climatisation.

Pour cela, l'élément de répartition d'air 1 comprend un corps d'aérateur 4 qui est raccordé audit système de climatisation par un conduit, non représenté.

Ainsi que montré notamment à la Fig. 2, l'élément de répartition d'air 1 est équipé d'un dispositif de diffusion d'au moins un parfum dans l'habitacle du véhicule automobile et qui est désigné dans son ensemble par la référence 10. Ce dispositif de diffusion 10 est monté derrière la façade de l'élément de répartition d'air 1 et sur le côté du corps 4 de cet élément 1, comme on le verra ultérieurement. Dans cet exemple de réalisation, le dispositif de diffusion 10 est monté derrière la planche de bord du véhicule.

Ce dispositif de diffusion 10 comprend un boîtier 11 adaptable sur une face latérale du corps 4 de l'élément de répartition d'air 1 et qui contient au moins une cartouche de parfum 5.

Dans les exemples de réalisation représentés sur les Figs. le boîtier 11 contient deux cartouches 5. Il est évident que ce boîtier 11 peut contenir qu'une seule cartouche 5.

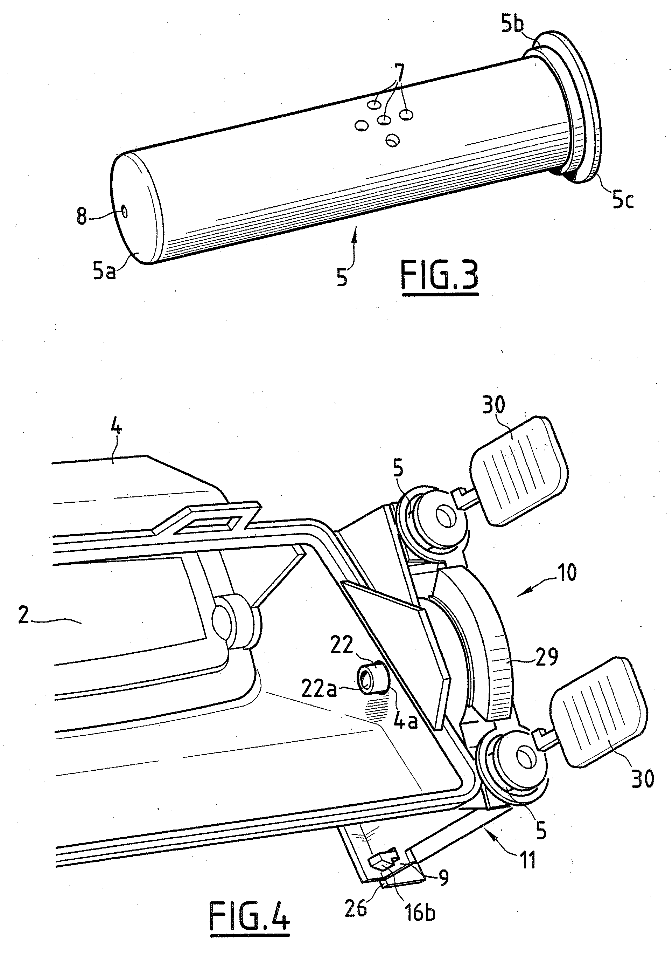

Ainsi que montré à la Fig. 3, la cartouche 5 se présente sous la forme d'un cylindre 5a fermé à chacune de ces extrémités par un opercule, respectivement 5a et 5b, l'opercule 5b étant pourvue d'une collerette 5c d'appui sur un rebord 6a d'un orifice 6, ménagé dans la façade de l'élément de répartition d'air 1, comme montré sur les Figs. 1 et 2.

La cartouche 5 est munie de trous 7 pour le dégagement de ce parfum, et dans l'opercule 5a d'un orifice 8 de mise à l'air libre de la cartouche 5. Cette cartouche 5 est remplie par exemple de billes imbibées du parfum.

En se reportant maintenant aux Figs. 4 à 6, on va décrire le boîtier 11 du dispositif de diffusion 10 d'au moins un parfum. Le boîtier 11 se présente sous la forme d'un capot comportant une face avant formée par une paroi 12, une face arrière 13 ouverte, un fond 14 et deux parois latérales, respectivement 15a et 15b. Ces parois latérales 15a et 15b comportent chacune une patte, respectivement 16a et 16b, d'encliquetage chacune dans un orifice de réception 9 de forme complémentaire, ménagé sur la face latérale du corps 4 de l'élément de répartition d'air 1, comme montré à la Fig. 4.

Le boîtier 11 comporte également deux parois internes, respectivement 17a et 17b, s'étendant sensiblement parallèlement aux parois latérales, respectivement 15a et 15b et ménageant avec celle-ci deux emplacements, respectivement 18a et 18b, de positionnement d'une cartouche 5. Les emplacements 18a et 18b sont pourvus, à leur partie supérieure, d'un orifice, respectivement 19a et 19b, d'introduction d'une cartouche 5. Dans le cas d'une utilisation d'une seule cartouche 5, l'emplacement non utilisé est fermé par exemple par un obturateur, non représenté.

D'une manière générale, le boîtier 11 du dispositif de diffusion 10 contient des moyens de communication de l'intérieur de ce boîtier 11 avec l'élément de répartition d'air 1 et un organe de commande permettant, soit la diffusion de l'un des parfums dans l'habitacle du véhicule automobile, par l'intermédiaire de l'élément de répartition d'air, soit aucune diffusion de parfum.

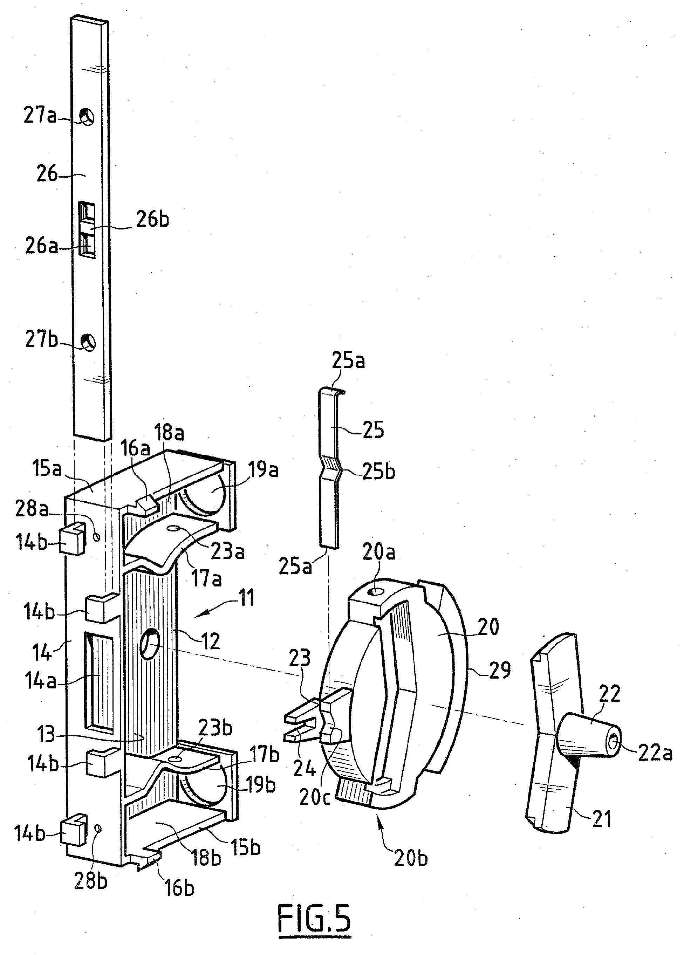

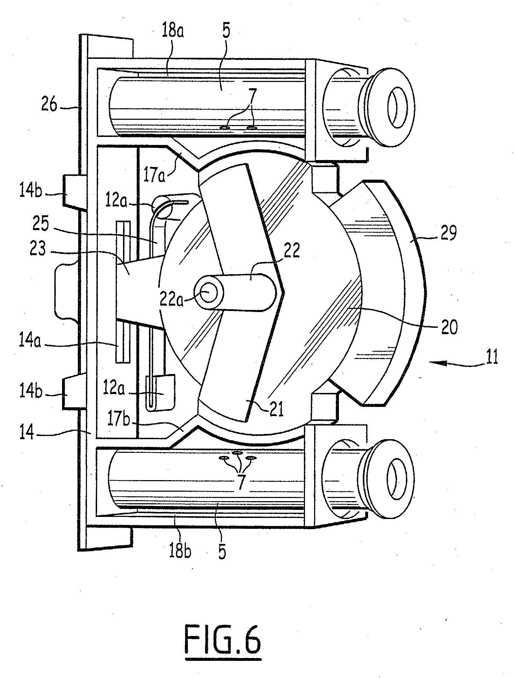

Ainsi que montré sur les Figs. 5 et 6, l'organe de commande est formé par une couronne 20 placée dans le boîtier 11 contre la paroi avant 12 entre les emplacements 18a et 18b de positionnement chacun d'une cartouche 5. La couronne 20 comporte une patte transversale 21 munie, en son milieu, d'un axe 22 destiné à être positionné dans un orifice 4a ménagé dans la face latérale du corps 4 de l'élément de répartition d'air 1, cet axe 22 constituant l'axe de rotation de la couronne 20.

Cette couronne 20, comporte, à sa partie inférieure, une patte 23 s'étendant perpendiculairement à l'axe 22 et comportant, à son extrémité libre, une fourche 24.

Le fond 14 du boîter 11 comporte, dans sa partie centrale, une ouverture 14a destinée au passage de la patte 23 et est pourvu de plusieurs rebords 14b formant des encoches de positionnement d'une réglette 26 déplaçable par coulissement contre ledit fond.

Pour cela, la réglette 26 est munie, dans sa partie centrale, d'une ouverture 26a comportant un ergot transversal 26b destiné à être placé dans la fourche 24 de la patte 23 solidaire de la couronne 20.

La réglette 26 comporte, deux trous, respectivement 27a et 27b, disposés de part et d'autre de l'ouverture 26a . De même, le fond 14 est pourvu, au niveau de chaque emplacement 18a et 18b, d'un orifice, respectivement 28a et 28b.

Les moyens de communication entre l'intérieur du boîtier 11 et l'intérieur du corps 4 de l'élément de répartition d'air 1 sont formés, d'une part, par un conduit axial 22a ménagé dans l'axe de rotation 22 de la couronne 20 et débouchant d'un côté à l'intérieur de cette couronne 20 et de l'autre côté dans le corps 4 de l'élément de répartition d'air 1 lorsque le boîtier 11 est fixé sur la face latérale de ce corps 4 pour que l'axe 22 soit positionné dans l'orifice 4a et, d'autre part, par un orifice 20a ménagé dans la couronne 20 en regard de l'emplacement 18a d'une première cartouche 5 et par un orifice 20b ménagé dans cette couronne 20 en regard de l'emplacement 18b de la seconde cartouche 5.

La distance séparant les deux orifices 27a et 27b de la réglette 26 est inférieure à la distance séparant les deux orifices 28a et 28b du fond 14 du boîtier 11.

Chaque paroi intérieure, respectivement 17a et 17b, comporte un orifice, respectivement 23a et 23b, mettant en communication chaque emplacement, respectivement 18a et 18b, avec un orifice, respectivement 20a et 20b, de la couronne 20.

Enfin, le boîtier 11 comporte un organe élastique 25 (Fig. 5) de maintien de la couronne 20 et de la réglette 26 en position intermédiaire dans laquelle les orifices supplémentaires 8 ménagés dans l'opercule 5a de chaque cartouche 5 sont obturés par cette réglette 21.

Comme représenté sur les Figs. 5 et 6, l'organe élastique est constitué par un ressort à lame 25 dont les extrémités 25a sont montées dans des encoches 12a ménagées sur la face interne de la paroi avant 12. Ce ressort à lame 25 comporte, dans sa partie centrale, un bossage 25b destiné à coopérer avec une gorge 20c prévue à la partie inférieure de la couronne.

La couronne 20 comporte, sur une partie de sa surface externe, une zone 29 surmoulée par exemple en caoutchouc affleurant la face externe de l'équipement intérieur du véhicule, comme représenté sur les Figs. 1 et 2, de façon à pouvoir déplacer en rotation la couronne 20 depuis l'habitacle du véhicule automobile.

Le dispositif de diffusion des parfums fonctionne de la manière suivante.

Tout d'abord, une cartouche 5 est placée dans chaque emplacement 18a et 18b en introduisant cette cartouche 5 dans un orifice 6 ménagé dans la façade de l'élément de répartition d'air 1. La collerette 5c de chaque cartouche vient en appui sur le rebord 6a de l'orifice 6 correspondant pour que l'opercule 5b affleure la façade de l'élément de répartition d'air 1, ainsi que représenté à la Fig. 1.

Après avoir basculé la grille 3 de l'élément de répartition d'air 1 dans l'habitacle du véhicule automobile, l'utilisateur peut déplacer la couronne 20 par l'intermédiaire de la zone 29 entre une première position dans laquelle le parfum contenu dans la cartouche 5 disposée dans le premier emplacement 18a est diffusé, une deuxième position neutre dans laquelle aucun parfum n'est diffusé et une troisième position dans laquelle le parfum contenu dans la cartouche 5 disposée dans le second emplacement 18b est diffusé.

Dans la position neutre de la couronne 20, le bossage 25b du ressort à lame 25 est positionné dans la gorge 20c afin de donner un cran sensitif à l'utilisateur dans cette position.

Pour diffuser le parfum contenu dans la cartouche 5 placée dans le premier emplacement 18a, l'utilisateur fait pivoter la couronne 20 en agissant sur la zone 29 pour déplacer la réglette 26 par coulissement afin de positionner le premier trou 27a en regard de l'orifice 28a et de l'orifice 8 de la cartouche 5 placée dans ledit premier compartiment 18a de façon à mettre à l'air libre l'intérieur de ladite cartouche 5. Cette mise à l'air libre de la cartouche 5 placée dans le premier compartiment 18a permet de diffuser le parfum contenu dans ladite cartouche 5 par effet d'aspiration, selon le principe "venturi", de l'air circulant dans le corps 4 de l'élément de répartition d'air 1 dans l'habitacle. Cet effet, d'aspiration permet le dégagement de ce parfum par l'intermédiaire des trous 7 de la première cartouche 5 et de diffuser le parfum à travers l'orifice 23a de la paroi intermédiaire 17a, l'orifice 20a de la couronne 20 et de l'intérieur de cette couronne 20 dans le corps 4 de l'élément de répartition d'air par l'intermédiaire du conduit axial 22a ménagé dans l'axe 22 de rotation de la couronne 20.

Ainsi, le parfum contenu dans la première cartouche 5 est diffusé dans l'habitacle 1 par l'intermédiaire de l'élément de répartition d'air 1.

Pour diffuser un parfum différent, c'est à dire celui contenu dans la seconde cartouche 5 disposée dans le second emplacement 18b, l'utilisateur agit sur la zone 29 de la couronne 20 pour la faire pivoter autour de son axe de rotation 22. En pivotant la couronne 20 déplace par coulissement la réglette 26 de façon à obturer l'orifice 8 ménagé dans l'opercule 5a de la cartouche 5 placée dans le premier compartiment 18a et à disposer le trou 27b de la réglette 26 dans l'axe de l'orifice 14b ménagé dans le fond 14 du boîtier 11 pour mettre à l'air libre l'intérieur de la cartouche 5 placée dans le second emplacement 18b.

Par effet d'aspiration, selon le principe "venturi", de l'air circulant dans le corps 4 de l'élément de répartition d'air 1, le parfum contenu dans la cartouche 5 disposée dans le second emplacement 18b passe par les orifices 23b et 20b, puis dans le conduit axial 22a et le corps 4 de l'élément de répartition d'air 1 pour être diffusé à l'intérieur de l'habitacle du véhicule automobile.

Dans le cas où l'utilisateur ne souhaite pas qu'un parfum soit diffusé à l'intérieur de l'habitacle, il tourne la couronne 20 par l'intermédiaire de la zone 29 pour la placer dans la deuxième position dite position neutre dans laquelle l'orifice 8 de chaque cartouche 5 est obturé par la réglette 26 afin d'éviter la mise à l'air libre de ces cartouches 5 et la diffusion de l'un ou l'autre des parfums. Dans cette deuxième position, la couronne 20 et la réglette 26 sont maintenues par l'organe élastique 25 au moyen du bossage 25a placé dans la gorge 20c.

Après épuisement du parfum contenu dans l'une des cartouches 5, l'utilisateur extrait cette cartouche du boîtier 11 par l'intermédiaire d'une clé 30 qu'il introduit dans la cartouche correspondante depuis l'habitacle du véhicule automobile, ainsi que représenté sur les Figs. 2 et 4. L'utilisation d'une clé évite qu'une cartouche soit retirée par exemple par des enfants. Après l'extraction d'une cartouche 5, l'utilisateur peut introduire une nouvelle cartouche dans le boîtier 11 du dispositif de diffusion du parfum 10. La densité de diffusion de l'un des parfums peut être gérée par la vitesse de l'air diffusé par l'élément de répartition d'air 1.

Le dispositif de diffusion selon l'invention peut ne contenir qu'une cartouche 5 et, dans ce cas, l'utilisateur peut par l'intermédiaire de la couronne 20 choisir, soit la diffusion d'un parfum dans l'habitacle, soit de ne diffuser aucun parfum dans cet habitacle.

Le dispositif selon l'invention présente l'avantage d'être intégré dans un élément de répartition d'air dans l'habitacle et d'offrir à l'utilisateur plusieurs parfums par une manoeuvre simple et depuis l'intérieur du véhicule automobile.

## Revendications

1. Dispositif de diffusion d'au moins un parfum dans un habitacle d'un véhicule automobile, **caractérisé en ce qu'**il comprend un boîtier (11) adaptable sur un élément (1) de répartition d'air dans l'habitacle et comprenant au moins un emplacement (18a) de positionnement d'une cartouche (5) de parfum munie de trous (7) pour le dégagement de ce parfum, des moyens (20a ; 22a) de communication de l'intérieur du boîtier (11) avec l'élément (1) de répartition d'air et un organe de commande (20) déplaçable au moins entre une première position d'ouverture d'un orifice supplémentaire (8) ménagé dans ladite cartouche (5) pour créer une mise à l'air libre de la cartouche (5) et diffuser le parfum par effet d'aspiration de l'air dans l'élément (1) de répartition à travers les moyens (20a ; 22a) de communication et les trous (7) de la cartouche (5) et une deuxième position de fermeture de cet orifice (8) pour empêcher la diffusion du parfum.

2. Dispositif selon la revendication 1, **caractérisé en ce que** l'élément (1) de répartition d'air est formé par un corps (4) d'aérateur installé derrière une ouverture (2) d'aération ménagée dans un équipement intérieur du véhicule et équipé de moyens (9) de fixation par encliquetage du boîtier (11) derrière une face extérieure dudit équipement, les moyens (22a) de communication débouchant dans ledit corps (4) d'aérateur.

3. Dispositif selon la revendication 1 ou 2, **caractérisé en ce que** l'organe de commande comprend une couronne (20) déplaçable en rotation dans le boîtier (11) autour d'un axe (22) et comportant une patte (23, 24) de déplacement en translation sur un fond (14) du boîtier (11) d'une réglette (26) munie d'un trou (27a) destiné à être placé en regard de l'orifice (8) de la cartouche (5) correspondante dans la première position dudit organe de commande (20).

4. Dispositif selon l'une quelconque des revendications 1 à 3, **caractérisé en ce que** les moyens de communication sont formés, d'une part, par un conduit axial (22a) ménagé dans l'axe de rotation (22) de la couronne (20) et débouchant d'un côté à l'intérieur de cette couronne (20) et de l'autre côté dans le corps (4) d'aérateur et, d'autre part, par un orifice (20a) ménagé dans la couronne (20) en regard de l'emplacement (18a) de la cartouche (5).

5. Dispositif selon l'une quelconque des revendications 1 à 4, **caractérisé en ce que** le boîtier (11) comporte deux emplacements (18a ; 18b) de positionnement de deux cartouches (5) contenant chacun un parfum différent, disposés de part et d'autre de la couronne (20).

6. Dispositif selon l'une quelconque des revendications 1 à 5, **caractérisé en ce que** la réglette (26) comporte un second trou (27b) et est déplaçable en translation par la couronne (20) dans une troisième position dans laquelle ledit second trou (21b) est destiné à être placé en regard de l'orifice (8) de la seconde cartouche (5) pour la mise à l'air libre de cette seconde cartouche (5), l'orifice (8) de la première cartouche (5) étant obturé par la réglette (26) dans ladite première position et les orifices (8) desdites cartouches (5) étant obturés par cette réglette (26) dans ladite deuxième position.

7. Dispositif selon l'une quelconque des revendications 1 à 6, **caractérisé en ce que** la couronne (20) comporte un second orifice (20b) en regard de l'emplacement (18b) de la seconde cartouche (5).

8. Dispositif selon l'une quelconque des revendications 1 à 7, **caractérisé en ce que** le boîtier (11) comporte un organe élastique (25) de maintien de la couronne (20) et de la réglette (26) dans la deuxième position.

9. Dispositif selon l'une quelconque des revendications 1 à 8, **caractérisé en ce que** la couronne (20) comporte, sur une partie de sa surface externe, une zone striée (29) affleurant la face externe de l'équipement intérieur du véhicule, pour déplacer ladite couronne (20) en rotation.

10. Dispositif selon l'une quelconque des revendications 1 à 9, **caractérisé en ce que** chaque cartouche (5) comporte une extrémité opposée à l'orifice (8) de mise à l'air libre, affleurant la face externe de l'équipement intérieur du véhicule.

11. Dispositif selon l'une quelconque des revendications 1 à 10, **caractérisé en ce que** chaque cartouche (5) est extractible à partir de l'intérieur du véhicule par une clé de préhension (30).
